# EUROPEAN PATENT SPECIFICATION

(11) **EP 2 058 576 B1**
(45) Date of publication and mention of the grant of the patent: **14.12.2011**
(21) Application number: 08388038.5
(22) Date of filing: 14.10.2008
(51) Int. Cl.: F16L 37/30

(54) **An adaptor for CO2 systems as well as a method for the use thereof**
Adapter für CO2-Systeme und Verwendungsverfahren
Adaptateur pour systèmes de CO2 et procédé pour son utilisation

(30) Priority: 15.10.2007 DK 200701484
(43) Date of publication of application: 13.05.2009
(73) Proprietor: Agramkow Fluid Systems A/S, 6400 Sønderborg (DK)
(72) Inventor: Cording, Louis B., 6400 Sønderborg (DK); Lund, Bjarne, 6400 Sønderborg (DK)
(74) Representative: Larsen, Hans Ole

(56) References cited:
- EP-A1- 0 403 345
- EP-A1- 1 431 648
- WO-A2-2006/072242
- DE-A1- 3 906 206
- GB-A- 2 004 031

## Description

The present invention relates to an adapter for CO₂ systems, said adapter having a coupling device intended to be secured to a pipe stub of the CO₂ system as well as a device for the opening of the valve in the pipe stub.

The present invention also relates to a method for the use of an adapter according to claims 1 - 3, wherein the adapter is applied to a pipe stub of a CO₂ system.

### Prior art

As a refrigerant in mobile air conditioning systems (a/c systems), R134a is being phased out because of its harmful impact on the environment. An alternative is the gas CO₂, which is colourless, odourless and non-toxic in natural amounts. In larger amounts, however, it may constitute a safety hazard to humans, e.g. if it penetrates into the passenger cabin in a car. This, risk, however, may be remedied by adding an odorous substance to the CO₂ which has an extremely unpleasant smell even in very small amounts, which will e.g. make car drivers lower the window or leave the car completely.

When filling either a mixture of odorous substance and CO₂ or of odorous substance alone (hereinafter also referred to as the medium) into an a/c system, coupling will take place in two steps. In the first step an adapter is coupled to a pipe stub of an a/c system, and in the second step a service valve in the pipe stub is opened, whereby the medium may be filled into the a/c system.

Uncoupling takes place in the opposite order of the coupling, but here a small amount of medium will be released into the surroundings, viz. the amount which is present between the pipe stub and the adapter, which will cause inconvenience to the operators.

WO 2006/072242 A2 discloses an adapter used when evacuating and/or pressure filling of a container, e.g. A/C systems in vehicles. The adapter can be coupled to a pipe stub having a valve and comprises a pin for opening the valve in the pipe stub in order to fill or evacuate the container. The coupling mechanism and the valve opening are actuated by one continuous linear movement of a piston using a single actuator.

EP 403345 A1 discloses a similar type of adapter which is mainly used in paint applying systems wherein locking of the adapter and opening of the valve is performed by two separately actuated pistons.

### The object of the invention

Accordingly, the object of the invention is to provide an adapter of the type stated in the opening paragraph, which makes it possible to fill or empty a CO₂ system, and ensures that the medium is not released into the surroundings when the said adapter is uncoupled, but that the amount present between the pipe stub and the adapter may be sucked out and be ventilated to a problem-free area.

### Summary of the invention

The object stated above is achieved by an adapter as described in the introductory portion of claim 1, wherein the coupling device comprises a first cylinder having a first piston which is connected with an external displaceable sleeve, and wherein the device for the opening of the valve of the pipe stub comprises a second cylinder having a second piston which is connected with an internal displaceable pressure pin having channels.

This makes it possible to fill a CO₂ system and ensures that the medium is not released into the surroundings when the said adapter is uncoupled.

The pressure pin is frustoconical at the end which is intended to affect the pipe stub of the CO₂ system, and the conical face is configured with a plurality of channel openings, which allows the medium to be freely filled into/emptled from the CO₂ system, as the channel openings are not blocked and the amount of CO₂ and/or odorous substance present between the pipe stub and the adapter may be sucked out and be ventilated to a problem-free area,

As will appear from claim 2, the first cylinder having the first piston is concentric with the centre line of the adapter and disposed next to the second cylinder having the second piston when seen in the axial direction of the adapter, and that the pressure pin is extending through the centre of the first cylinder and the first piston, which allows a compact structure of the adapter.

As will appear from claim 3, the invention also comprises a method for the use of the described adapter according to claims 1 - 2, wherein the adapter is applied to a pipe stub of a CO₂ system, and wherein a first cylinder is filled with compressed air or the like, whereby a first piston connected with an external displaceable sleeve is moved in the axial direction of the adapter toward the pipe stub and fixes the adapter to the pipe stub by means of a coupling device, following which a second cylinder is filled with compressed air or the like, whereby a second piston, which is connected with an internal displaceable pressure pin having channels, is moved in the axial direction of the adapter toward the pipe stub and activates a valve in the CO₂ system, whereby the entire system may be emptied of or be filled with CO₂ and/odorous substance. Then, the second piston, which is connected with an internal displaceable pressure pin having channels, is moved in the axial direction of the adapter away from the pipe stub, whereby the valve in the CO₂ system is closed, and the amount of CO₂ and/or odorous substance present between the pipe stub and the adapter may be sucked out and be ventilated to a problem-free area.

### The drawing

Exemplary embodiments of the invention will be explained more fully below with reference to the drawing, in which:
- fig. 1: shows an adapter and a pipe stub in an uncoupled position, and
- fig. 2: shows an adapter and a pipe stub in a coupled position, in which filling of CO₂ takes place, and
- fig. 3: shows an adapter and a pipe stub in a coupled position, in which the residual amount is emptied, and
in which the following reference numerals and designations are used:
- 1: Adapter
- 2: Coupling device
- 3: First cylinder
- 4: First piston
- 5: Sleeve
- 6: Second cylinder
- 7: Second piston
- 8: Pressure pin
- 9: Channels
- 10: Suction openings
- 11: Pipe stub (on CO₂ system)
- 12: Valve (in pipe stub on CO₂ system)

### Detailed description of the invention

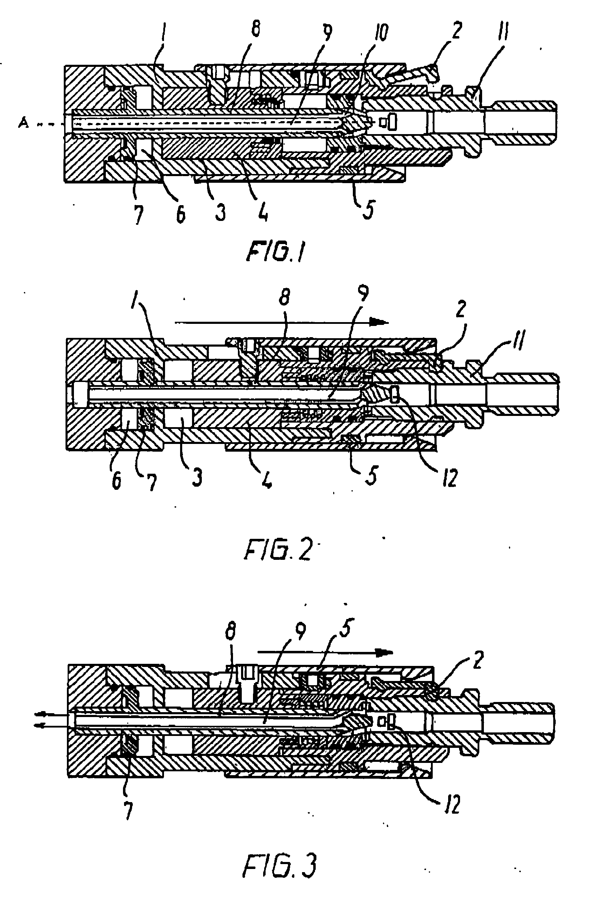

Figure 1 shows an adapter 1 and a pipe stub 11 in an uncoupled position, in which the adapter 1 has been joined with, but not yet coupled to a pipe stub 11 from a CO₂ system, Both the first piston 4 and the second piston 7 are in a starting position, i.e. furthest away from the pipe stub 11 on the CO₂ system. It also appears that the first cylinder 3 with the first piston 4 is concentric with the centre line (A) of the adapter and disposed next to the second cylinder 6 having the second piston 7 when seen in the axial direction of the adapter. A pressure pin 8 is connected to the second piston 7 and extends through the centre of the first cylinder 3 and the first piston 4.
Figure 2 shows an adapter 1 and a pipe stub 11 in a coupled position, as a first cylinder 3 has been filled with compressed air or the like, whereby a first piston 4 connected with an external displaceable sleeve 5 has been moved in the axial direction of the adapter toward the pipe stub 11 and has fixed the adapter 1 to the pipe stub 11 by means of a coupling device 2. A second cylinder 6 has likewise been filled with compressed air or the like, whereby a second piston 7, which is connected with an internal displaceable pressure pin 8 having channels 9, has been moved in the axial direction of the adapter toward the pipe stub 11 and has activated a valve 12 in the CO₂ system, whereby the entire system may be emptied of or be filled with CO₂ and/or odorous substance.
Figure 3 shows an adapter 1 and a pipe stub 11 in a coupled position, but where the second piston 7, which is connected with an internal displaceable pressure pin 8 having channels 9, has been moved in the axial direction of the adapter away from the pipe stub, whereby the valve 12 in the CO₂ system is closed, and where the amount of CO₂ and/or odorous substance present between the pipe stub and the adapter may be sucked out and be ventilated to a problem-free area.

## Claims

1. An adapter for CO₂ systems, said adapter having a coupling device intended to be secured to a pipe stub of the CO₂ system as well as a device for the opening of the valve in the pipe stub, wherein the coupling device (2) comprises a first cylinder (3) having a first piston (4) which is connected with an external displaceable sleeve (5), and wherein the device for the opening of the valve of the pipe stub comprises a second cylinder (6) having a second piston (7) which is connected with an internal displaceable pressure pin (8) **characterised in that** the pressure pin (8) comprises channels and that the pressure pin (8) is frustoconical at the end which is intended to affect the pipe stub (11) of the CO₂ system, and wherein the conical face is configured with a plurality of channel openings (10).

2. An adapter according to claim 1, **characterized in that** the first cylinder (3) having the first piston (4) is concentric with the centre line (A) of the adapter and disposed next to the second cylinder (6) having the second piston (7) when seen in the axial direction of the adapter, and that said pressure pin (8) is extending through the centre of the first cylinder (3) and the first piston (4).

3. A method for the use of the adapter according to claims 1 - 2, wherein the adapter (1) is applied to a pipe stub of a CO₂ system, and wherein a first cylinder (3) is filled with compressed air or the like, whereby a first piston (4) connected with an external displaceable sleeve (5) is moved in the axial direction of the adapter toward the pipe stub (11) and fixes the adapter (1) to the pipe stub (11) by means of a coupling device (2), following which a second cylinder (6) is filled with compressed air or the like, whereby a second piston (7), which is connected with an internal displaceable pressure pin (8), is moved in the axial direction of the adapter (1) toward the pipe stub (11) whereby the pressure pin (8) activates a valve (12) in the CO₂ system, whereby the entire system may be emptied of or be filled with CO₂ and/or odorous substance, after which the second piston (7), which is connected with an internal displaceable pressure pin (8) having channels (9), is moved in the axial direction of the adapter (1) away from the pipe stub (11), whereby the valve (12) in the CO₂ system is closed, and that the amount of CO₂ and/or odorous substance present between the pipe stub (11) and the adapter (1) may be sucked out and be ventilated to a problem-free area.

## Patentansprüche

1. Adapter für CO₂-Systeme, wobei der Adapter eine Kupplungsvorrichtung, die dazu eingerichtet ist, an einem Rohrstutzen des CO₂-Systems befestigt zu werden, wie auch eine Vorrichtung zum Öffnen des Ventils in dem Rohrstutzen hat, wobei die Kupplungsvorrichtung (2) einen ersten Zylinder (3) enthält, der einen ersten Kolben (4) hat, der mit einer äußeren verschiebbaren Hülse (5) verbunden ist, und die Vorrichtung zum Öffnen des Ventils des Rohrstutzens einen zweiten Zylinder (6) enthält, der einen zweiten Kolben (7) hat, der mit einem inneren verschiebbaren Druckbolzen (8) verbunden ist, **dadurch gekennzeichnet, dass** der Druckbolzen (8) Kanäle aufweist und der Druckbolzen (8) an dem Ende kegelstumpfartig ist, das dazu bestimmt ist, auf den Rohrstutzen (11) des CO₂-Systems einzuwirken, wobei die konische Fläche mit einer Vielzahl von Kanalöffnungen (10) versehen ist.

2. Adapter nach Anspruch 1, **dadurch gekennzeichnet, dass** der erste Zylinder (3), der den ersten Kolben (4) hat, mit der Mittellinie (A) des Adapters konzentrisch ist und in der Näher des zweiten Zylinders (6) angeordnet ist, der den zweiten Kolben (7) hat, wenn dies in axialer Richtung des Adapters betrachtet wird, und dass der Druckbolzen (8) durch das Zentrum des ersten Zylinders (3) und des ersten Kolbens (4) verläuft.

3. Verfahren für die Verwendung des Adapters nach Anspruch 1 bis 2, bei dem der Adapter (1) an einem Rohrstutzen eines CO₂-Systems verwendet wird und ein erster Zylinder (3) mit Druckluft oder dergleichen gefüllt wird, wodurch ein erster Kolben (4), der mit einer äußeren verschiebbaren Hülse (5) verbunden ist, in der Achsrichtung des Adapters hin zu dem Rohrstutzen (11) bewegt wird und den Adapter (1) an dem Rohrstutzen (11) mit Hilfe einer Kupplungsvorrichtung (2) fixiert, worauf ein zweiter Zylinder (6) mit Druckluft oder dergleichen gefüllt wird, wodurch ein zweiter Kolben (7), der mit einem inneren verschiebbaren Druckbolzen (8) verbunden ist, in der Achsrichtung des Adapters (1) hin zu dem Rohrstutzen (11) bewegt wird, wodurch der Druckbolzen (8) ein Ventil (12) in dem CO₂-System aktiviert, wodurch aus dem gesamten System CO₂ und/oder eine riechende Substanz abgelassen oder das System mit dieser befüllt werden kann, worauf der zweite Kolben (7), der mit einem inneren verschiebbaren Druckkolben (8) verbunden ist, der über Kanäle (9) verfügt, in der Achsrichtung des Adapters (1) von dem Rohrstutzen (11) weg bewegt wird, wodurch das Ventil (12) in dem CO₂-System geschlossen wird, wobei die Menge von CO₂ und/oder einer riechenden Substanz, die sich zwischen dem Rohrstutzen (11) und dem Adapter (1) befindet, herausgesaugt und in einen unbedenklichen Bereich entlüftet werden kann.

## Revendications

1. Adaptateur pour des systèmes de CO₂, ledit adaptateur comportant un dispositif de couplage destiné à être arrimé dans un tronçon de tuyau du système de CO₂ ainsi qu'un dispositif permettant l'ouverture de la soupape dans le tronçon de tuyau, dans lequel le dispositif de couplage (2) comprend un premier cylindre (3) comportant un premier piston (4) qui est raccordé à un manchon déplaçable externe (5), et dans lequel le dispositif destiné à l'ouverture de la soupape du tronçon de tuyau comprend un second cylindre (6) comportant un second piston (7) qui est raccordé à une chandelle de pression déplaçable interne (8), **caractérisé en ce que** la chandelle de pression (8) comprend des canaux et **en ce que** la chandelle de pression (8) est tronconique à l'extrémité qui est destinée à affecter le tronçon de tuyau (11) du système de CO₂, et dans lequel la face conique est configurée avec une pluralité d'ouvertures de canal (10).

2. Adaptateur selon la revendication 1, **caractérisé en ce que** le premier cylindre (3) comportant le premier piston (4) est concentrique avec la ligne centrale (A) de l'adaptateur et est disposé à côté du second cylindre (6) comportant le second piston (7) dans une vue dans la direction axiale de l'adaptateur, et **en ce que** ladite chandelle de pression (8) s'étend à travers le centre du premier cylindre (3) et le premier piston (4).

3. Procédé d'utilisation de l'adaptateur selon les revendications 1 et 2, dans lequel l'adaptateur (1) est appliqué à un tronçon d'un tuyau d'un système de CO₂, et dans lequel un premier cylindre (3) est rempli avec de l'air comprimé ou similaire, moyennant quoi un premier piston (4) raccordé à un manchon déplaçable externe (5) est déplacé dans la direction axiale de l'adaptateur vers le tronçon de tuyau (11) et fixe l'adaptateur (1) au tronçon de tuyau (11) au moyen d'un dispositif de couplage (2) après quoi un second cylindre (6) est rempli avec de l'air comprimé ou similaire, moyennant quoi un second piston (7), qui est raccordé à une chandelle de pression déplaçable interne (8) est déplacé dans la direction axiale de l'adaptateur (1) vers le tronçon de tuyau (11), moyennant quoi la chandelle de pression (8) active une soupape (12) dans le système de CO₂, moyennant quoi le système entier peut être vidé ou être rempli avec du CO₂ et/ou une substance odorante, après quoi le second piston (7), qui est raccordé à une chandelle de pression déplaçable interne (8) comportant des canaux (9), est déplacé dans la direction axiale de l'adaptateur (1) en éloignement du tronçon de tuyau (11), moyennant quoi la soupape (12) dans le système de CO₂ est fermée, et en ce que la quantité de CO₂ et/ou de substance odorante présents entre le tronçon de tuyau (11) et l'adaptateur (1) peut être extraite par aspiration et ventilée vers une zone exempte de problème.
